# EUROPÄISCHE PATENTSCHRIFT

(11) **EP 1 390 782 B1**
(45) Veröffentlichungstag und Bekanntmachung des Hinweises auf die Patenterteilung: **08.06.2005**
(21) Anmeldenummer: 02740419.3
(22) Anmeldetag: 08.03.2002
(51) Int. Cl.: G02B 1/00, G02B 6/293

(54) **AWG-KOPPLER ZUR TRENNUNG VON ELEKTROMAGNETISCHER STRAHLUNG MIT VERSCHIEDENEN WELLENLÄNGENBEREICHEN SOWIE NACHRICHTENTECHNISCHES SYSTEM**
AWG-COUPLER FOR SEPARATING ELECTROMAGNETIC RAYS WITH DIFFERENT WAVELENGTH RANGES AND A COMMUNICATION TECHNOLOGY SYSTEM
COUPLEUR A RESEAU SELECTIF PLANAIRE DESTINE A LA SEPARATION DE RAYONNEMENTS ELECTROMAGNETIQUES AYANT DIFFERENTES PLAGES DE LONGUEURS D'ONDE, ET SYSTEME DE COMMUNICATION ASSOCIE

(30) Priorität: 13.03.2001 DE 10112331
(43) Veröffentlichungstag der Anmeldung: 25.02.2004
(73) Patentinhaber: SCHOTT AG, 55122 Mainz (DE)
(72) Erfinder: ANTON, Andrea, 55543 Bad Kreuznach (DE); KÄLBER, Tobias, 55116 Mainz (DE); WOLFF, Detlef, 55129 Mainz (DE); LOHMEYER, Manfred, 55299 Nackenheim (DE); BRINKMANN, Matthias, 55268 Nieder-Olm (DE); GERSTNER, Klaus, 55129 Mainz (DE)
(74) Vertreter: Herden, Andreas, Dipl.-Ing.
(86) Internationale Anmeldenummer: PCT/EP2002/002538
(87) Internationale Veröffentlichungsnummer: WO 2002/079810

(56) Entgegenhaltungen:
- EP-A- 0 936 483
- EP-A- 0 984 304
- WO-A-00/41015
- WO-A-99/21308
- US-A- 5 745 616
- US-B1- 6 282 344

## Beschreibung

Die Erfindung betrifft einen AWG-Koppler (Arrayed Wave Guide Grating-Koppler) für die spektrale Trennung von elektromagnetischer Strahlung, welche verschiedene Frequenzbeziehungsweise Wellenlängenbereiche aufweist.

Derartige Koppler werden in der Informationsverarbeitung und Nachrichtentechnik zur Trennung von signalführenden optischen Bändern elektromagnetischer Strahlung mit verschiedener Wellenlänge verwendet.

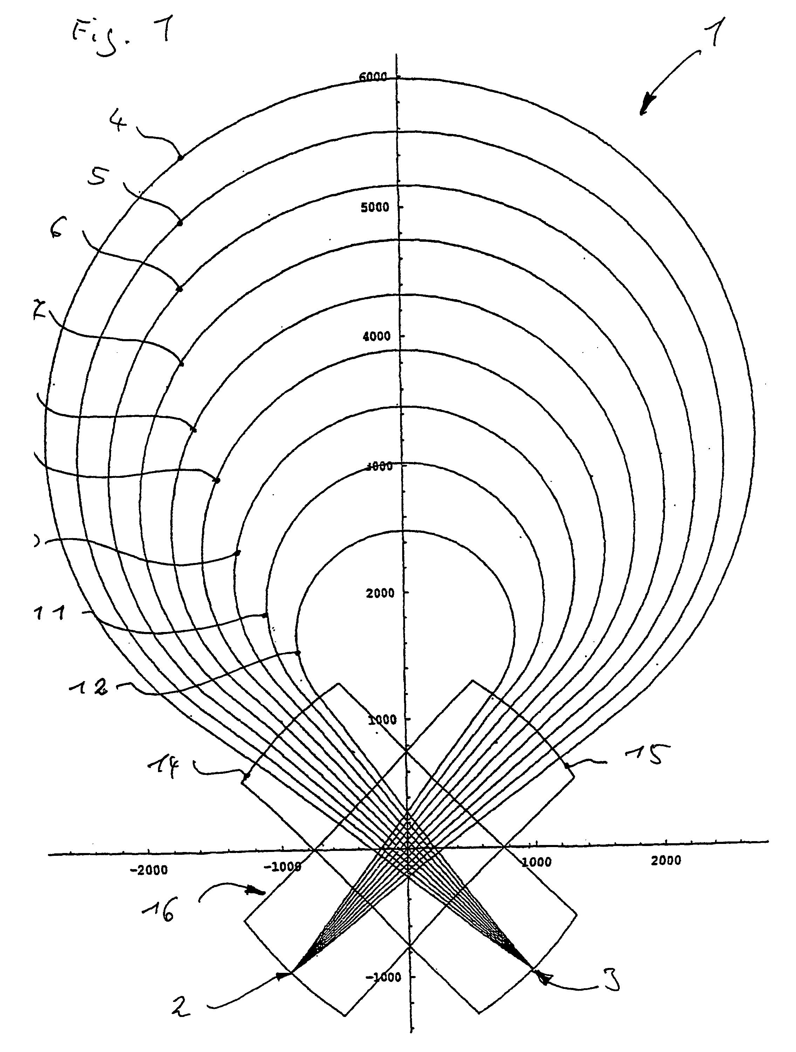

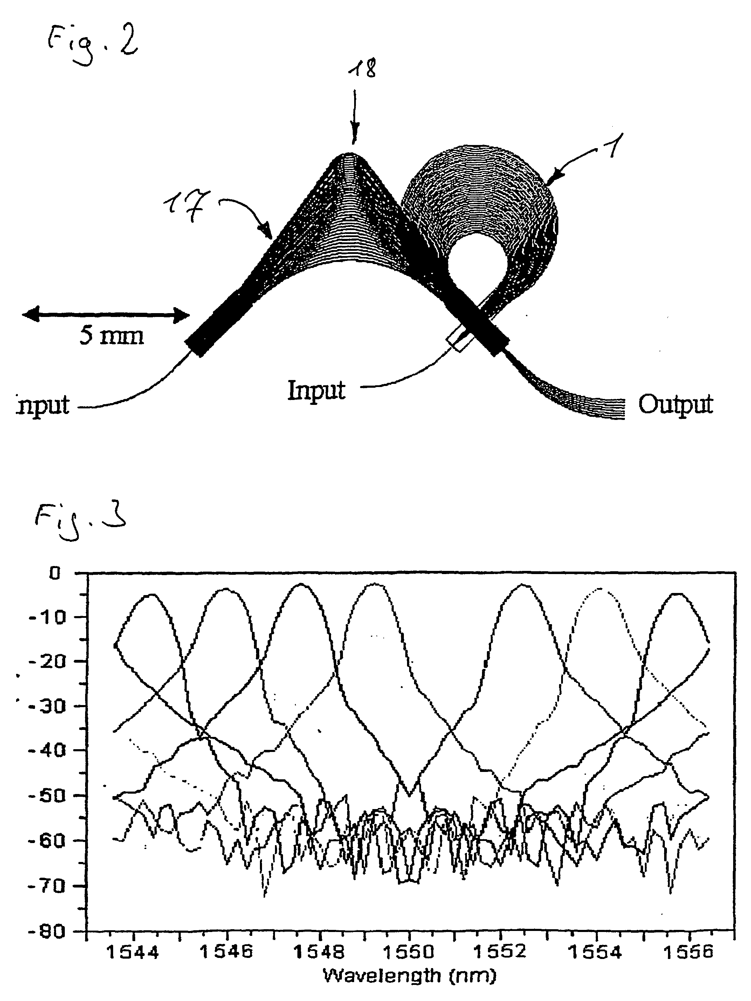

Bisherige AWG-Koppler weisen üblicherweise den in der linken Hälfte von Fig. 2 dargestellten Aufbau auf, der eine relativ große Fläche einnimmt. In den verschiedenen Armen des vorbekannten Kopplers, welche jeweils der Erzeugung von optischen Weglängenunterschieden dienen, treten zum Teil sehr kleine Biegeradien auf, wodurch Abstrahlverluste und Beeinflussungen des effektiven Brechungsindex auftreten können, welche die Leistungseigenschaften des Kopplers beeinträchtigen.

Dokument US 5 745 616 offenbart AWG-Koppler, bei denen durch den Einsatz reflektierender Flächen in den Sternkopplern bzw. den Armen des AWG eine Reduzierung der Grundfläche der AWG-Koppler erreicht wird.

Dokument WO 00/41015 offenbart AWG-Koppler mit reflektierenden Elementen in der AWG-Armen und einem einzigen Sternkoppler.

Dokument EP 0 936 483 offenbart einen ADD/DROP-Multiplexer mit zwei Sätzen von AWG-Armen zwischen zwei Sternkopplern. Zwei Flächen des zweiten Sternkopplers sind durch mehrere Wellenleiter gleicher optischer Weglänge verbunden, die das Ein-bzw. Auskoppeln (ADD/DROP) von Signalen bestimmter Wellenlängen ermöglichen.

Der Erfindung liegt die Aufgabe zugrunde, einen gattungsgemäßen AWG-Koppler bereitzustellen, welcher eine geringere räumliche Erstreckung aufweist.

In höchst überraschend einfacher Weise wird dies bereits mit einem AWG-Koppler mit den Merkmalen des Anspruchs 1 erreicht.

Bevorzugte Ausführungsformen sind durch die Ansprüche 2-8 definiert.

Weist dieser AWG-Koppler einen Sternkoppler, insbesondere als Freistrahlbereich für die Einkopplung und Auskopplung von elektromagnetischer Strahlung auf, so können gegenüber dem Stand der Technik drastische Einsparungen in Bezug auf den benötigten Platz auf dem optischen Substrat erreicht werden.

Darüber hinaus verfügt eine derartige Konstruktion aufgrund des geringeren Platzbedarfs auch über deutlich verbesserte thermische Eigenschaften, da eine stabile Temperaturverteilung bzw. Konstanthaltung der Temperaturverteilung bei kleineren Substraten einfacher zu erreichen ist, als bei den herkömmlichen langgestreckten AWG-Konstruktionen.

Ferner ist es für die üblichen Beschichtungstechniken von großem Vorteil, wenn kleinere Flächenbereiche zu beschichten sind, da hierbei die nötigen Prozeßparameter und insbesondere die Brechzahldifferenzen Δn sehr viel homogener gehalten werden können, wodurch auch die Eigenschaften des AWG-Kopplers, wie beispielsweise dessen Schmalbandigkeit bzw. Trennschärfe, verbessert werden können.

Da bei der Herstellung der Koppler in der Regel die benötigte Substratfläche quadratisch mit in die Herstellungskosten eingeht, weist der erfindungsgemäße AWG-Koppler nicht nur deutlich verbesserte Leistungseigenschaften auf, sondern ist darüber hinaus auch kostengünstiger zu fertigen.

Wird der Freistrahlbereich des AWG-Kopplers so ausgestaltet, daß sowohl die in den AWG-Koppler eintretende als auch aus dem AWG-Koppler austretende Strahlung geführt werden kann, kann hierbei mit nur einer einzigen optischen Baugruppe, nämlich mit dem Sternkoppler, welcher den Freistrahlbereich umfaßt, platzsparend die Strahlbeziehungsweise Wellenführung zu den externen Anschlüssen sowie in die verschiedenen Arme des Kopplers verwirklicht werden.

In bevorzugter Weise umfaßt der Freistrahlbereich einen Sternkoppler, der beispielsweise als Doppel-Sternkoppler so ausgebildet ist, daß sich die eingekoppelte und die auszukoppelnde elektromagnetische Strahlung überschneiden. Hierdurch können besonders platzsparende Anordnungen insbesondere dann geschaffen werden, wenn mehrere Sätze von einander zugehörigen Armen jeweils gruppenweise winkelversetzt jeweils eine Gruppe von eintretender elektromagnetischer Strahlung und austretender elektromagnetischer Strahlung zugeordnet sind.

Wird bei einer derartigen Anordnung elektromagnetische Strahlung, welche aus einem ersten Satz von Armen austritt, einem zweiten Satz von Armen zugeführt, können wesentlich steilere Filtereigenschaften mit einer einzigen Mehrfach-AWG-Koppleranordnung erreicht werden.

In besonders bevorzugter Weise sind die Arme des AWG-Kopplers, welche den optischen Weglängenunterschied definieren an eine Austrittsfläche und an eine Eintrittsfläche des einen Strahlkopplers angekoppelt, wodurch keine langgestreckte Bauform wie beim Stand der Technik sondern eine in sich geschlossene Bauform ermöglicht wird, welche die beschriebenen vorteilhaften reduzierten Abmessungen aufweist.

In besonders bevorzugter Weise weist der AWG-Koppler keine scharfen Biegungen in den Armen auf, welche den optischen Weglängenunterschied definieren, sondern sind die Arme auf einer im wesentlichen keulenförmigen Linie angeordnet, wodurch Abstrahlungsverluste und Verschlechterung der Trennschärfe des AWG-Kopplers deutlich vermindert werden können.

Eine besonders bevorzugte Ausführungsform des AWG-Kopplers umfaßt einen zweidimensionalen Oberflächenwellenleiter, welcher als PECVD-Schichtsystem (Plasma enhanced Chemical Vapor Deposition Schichtsystem) und insbesondere als PICVD-Schichtsystem (Plasma induced Chemical Vapor Deposition Schichtsystem) auf ein Substrat aufgebracht ist.

Mit der Erfindung lassen sich ferner vorteilhaft räumlich verkleinerte, weniger durch Temperatureinwirkung störanfällige, kostengünstige nachrichtentechnische Systeme mit verbesserter Leistung bereitstellen.

Die Erfindung wird nachfolgend anhand bevorzugter Ausführungsformen und unter Bezugnahme auf die beigeschlossenen Zeichnungen detaillierter beschrieben.

Es zeigen:
- Fig. 1: das Oberflächenlayout eines erfindungsgemäßen AWG-Kopplers, wie sich dieses in der Oberfläche eines optischen Substrates erstreckt,
- Fig. 2: den Vergleich zwischen einem Standardlayout und dem erfindungsgemäßen Design, wobei im wesentlichen von beiden Systemen gleiche Wellenlängenunterschiede bei ähnlichen Leistungseigenschaften auflösbar sind,
- Fig. 3: die spektrale Auflösung des herkömmlichen und des erfindungsgemäßen AWG-Kopplers,
- Fig. 4: eine zweite erfindungsgemäße Ausführungsform des AWG-Kopplers, welche einen vergrößerten Freistrahlbereich aufweist,
- Fig. 5: ein Layout einer dritten erfindungsgemäßen Ausführungsform, bei welchem.sich zwei AWG-Koppler einen Freistrahlbereich teilen,
- Fig. 6: ein der Fig. 5 ähnliches Layout, bei welchem der Eingangskanal des ersten AWG-Kopplers die Pfade des zweiten AWG-Kopplers kreuzt,
- Fig. 7: ein der Fig. 6 ähnliches Layout, bei welchem sich die Arme der beiden AWG-Koppler gegenseitig durchdringen,
- Fig. 8: eine Doppel-AWG-Koppleranorndung, bei welchem sich die elektromagnetische Strahlung nach dem Freistrahlbereich auf zwei antisymmetrisch angeordnete AWG-Koppler aufteilt und in zwei Ausgangskanal-Gruppen mit im wesentlichen halber Intensität ausgekoppelt wird und
- Fig. 9: einen mit Zu- und Ableitungen versehenen AWG-Koppler.

Bei der nachfolgenden Beschreibung der bevorzugten Ausführungsformen wird zunächst auf Fig. 1 Bezug genommen, welche das Oberflächen-Layout eines erfindungsgemäßen AWG-Kopplers darstellt, der insgesamt mit dem Bezugszeichen 1 bezeichnet ist.

Dieser AWG-Koppler 1 ist als zweidimensionale Wellenleiteranordnung in der Oberfläche eines optischen Substrates ausgebildet und ist durch PECVD-Techniken, in bevorzugter Weise durch PICVD-Techniken, als entsprechendes Schichtsystem mit Brechzahlunterschieden ausgebildet, welche eine sichere Führung der elektromagnetischen Strahlen in den jeweiligen Wellenleitern gestattet.

Die Figuren zeigen jeweils maßstabsgerechte Darstellungen zur Verdeutlichung des erfindungsgemäßen Layouts und weisen Skalen auf, welche in der Einheit µm angegeben sind.

Der AWG-Koppler 1 aus Fig. 1 ist ein 200 GHz AWG-Koppler mit einer Zentralwellenlänge von 1,55 µm, der mit einem Eingangskanal 2 und acht Ausgangskanälen ausgestattet ist, von welchem nur der mit dem Bezugszeichen 3 gekennzeichnete Ausgangskanal beispielhaft dargestellt ist.

Der AWG-Koppler 1 umfaßt vierzig Arme, von welchen nur jeweils jeder fünfte Arm 4 bis 12 in den Figuren dargestellt ist. Die Arme 4 bis 12 erzeugen jeweils schrittweise einen anderen optischen Weglängenunterschied und weisen in bevorzugter Weise jeweils zwischen zwei benachbarten Armen einen konstanten optischen Weglängenunterschied auf.

Die Arme 4 bis 12 sind an einer Austrittsfläche 15 und an einer Eintrittsfläche 14 des Sternkopplers 16 angeschlossen, so daß in den Eingangskanal 2 eintretende Strahlung vom Sternkoppler 16 gleichmäßig auf die Arme 4 bis 12 an der Austrittsfläche 15 abgebildet werden.

Die durch die Arme 4 bis 12 tretende elektromagnetische Strahlung wird mit definiertem Laufzeitunterschied und nach Einwirkung einer vorbestimmten, durch das Schichtsystem definierten Dispersion an der Austrittsfläche 14 ankommen und vom Sternkoppler 16 spektral separiert beziehungsweise in jeweilige Wellenlängenbereiche getrennt, an dessen acht Ausgängen bereitgestellt.

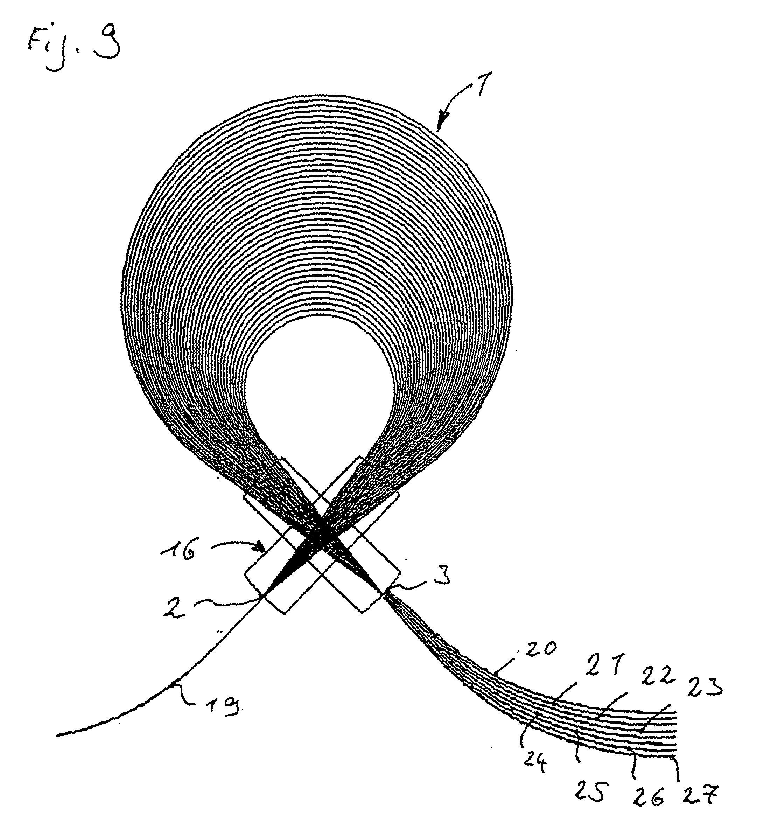

Von diesen acht Ausgängen ist lediglich der Ausgangskanal 3 beispielhaft dargestellt. Jedoch ist dem Fachmann auf diesem Gebiet sowohl die Konstruktion eines Sternkopplers als auch der Anschluß von Ausgangskanälen an dessen Ausgängen wohl bekannt und wird in Fig. 9 beispielhaft dargestelt.

Nachfolgend wird auf Fig. 2 Bezug genommen, welche mit dem Bezugszeichen 17 angedeutet einen herkömmlichen AWG-Koppler in dessen flächiger Erstreckung gegenüber dem erfindungsgemäßen AWG-Koppler 1 in einem exakten Größenvergleich darstellt.

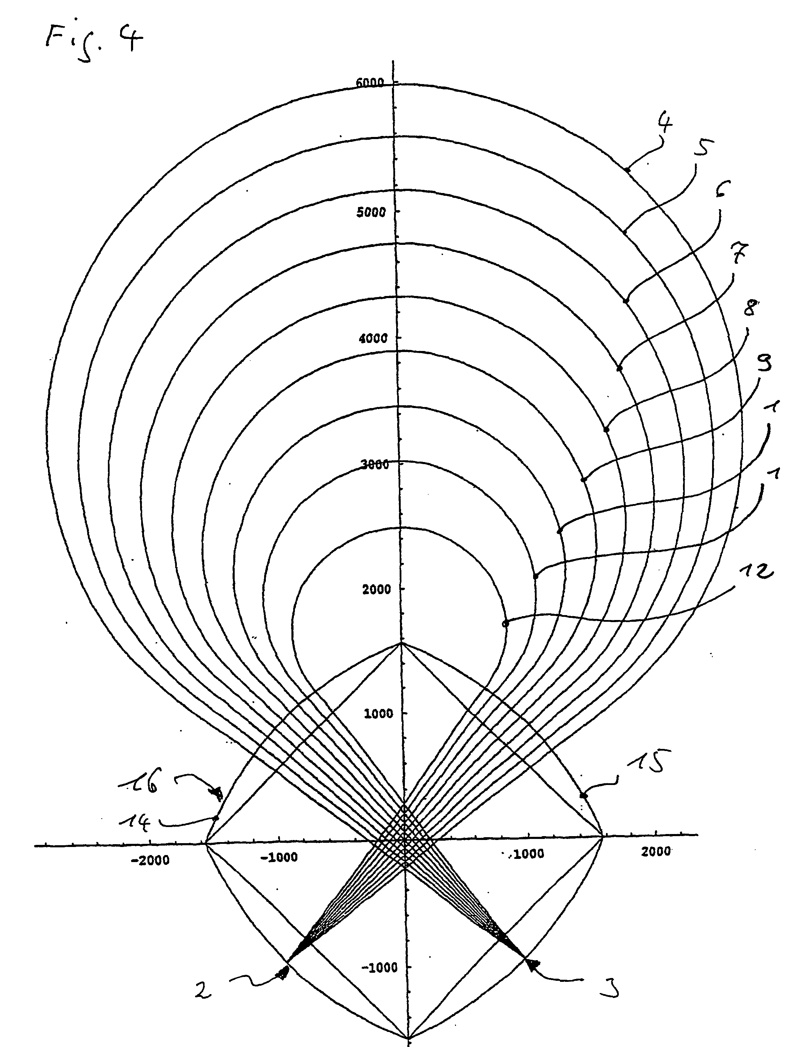

Fig. 3 zeigt die spektrale Auflösung als Funktion der Wellenlänge für den herkömmlichen sowie für den erfindungsgemäßen AWG-Koppler 1, woraus sich dessen hervorragende Trennschärfe bei geringerem Platzbedarf eindeutig ergibt. In Fig. 3 ist jeder erste Peak dem herkömmlichen und jeder zweite Peak dem erfindungsgemäßen AWG-Koppler 1 zugeordnet.

Bei der nachfolgenden Beschreibung weiterer erfindungsgemäßer Ausführungsformen werden jeweils gleiche Bezugszeichen für gleiche oder gleichwirkenden Bestandteile verwendet.

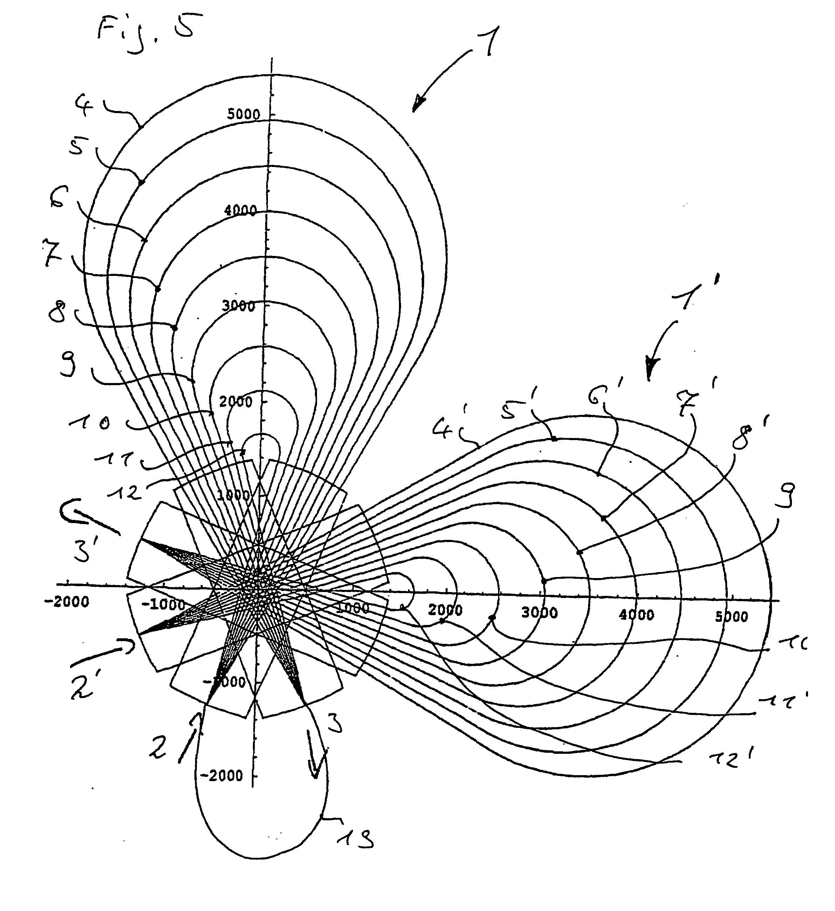

Die in Fig. 4 dargestellte, zweite erfindungsgemäße Ausführungsform des AWG-Kopplers 1 zeigt ebenfalls eine maßstäbliche Darstellung in µm-Angaben mit einem vergrößerten Freistrahlbereich des Sternkopplers 16. Bei diesem sowie bei dem AWG-Koppler 1 der ersten erfindungsgemäßen Ausführungsform und vorzugsweise den Sternkopplern der weiteren erfindungsgemäßen Ausführungsformen liegen die Arme 4 bis 12 auf nahezu kreisförmigen bis keulenförmigen Abschnitten, welche deutliche geringere Biegeradien aufweisen, als der obere Bereich 18 des herkömmlichen AWG-Kopplers. Dieser Freistrahlbereich definiert einen 1-zu-N-Übertragungsbereich, innerhalb dessen eine Übertragung von einem zu N optischen Pfaden oder von N optischen Pfaden zu einem optischen Pfad bereitgestellt wird. Beispielhaft hat N bei den hier vorgestellten Ausführungsformen den Wert 36 oder 40 stellvertretend für 36 oder 40 Arme.

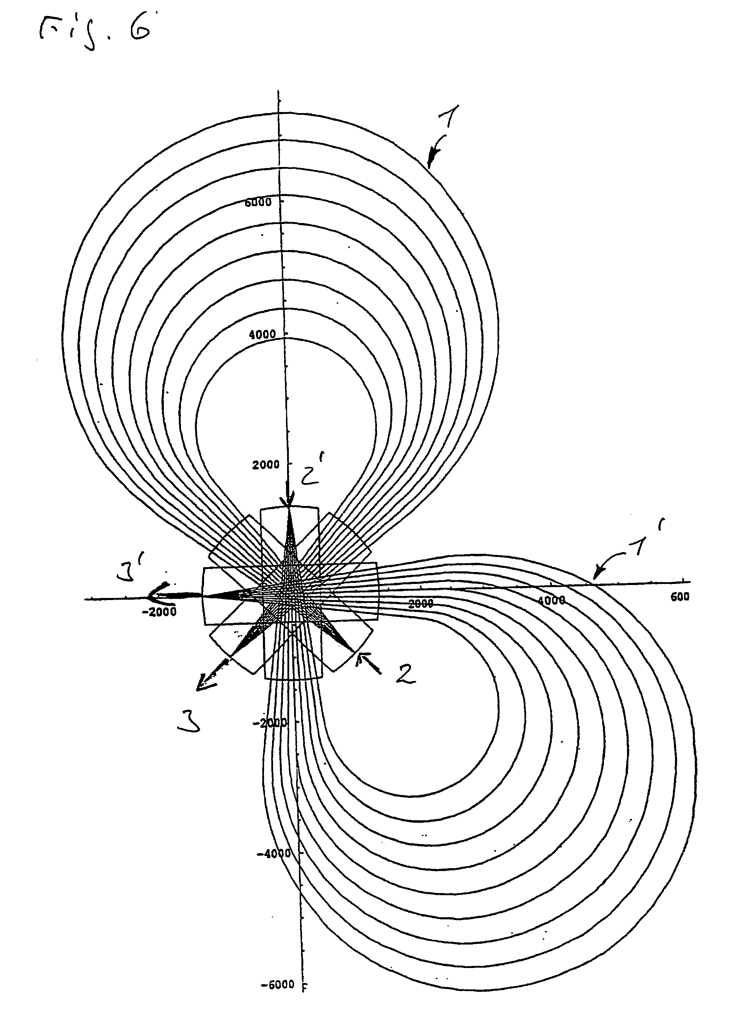

In Fig. 5 ist ein Layout dargestellt, bei welchem sich zwei AWG-Koppler 1, 1' einen Freistrahlbereich 16 teilen und bei welchem zwei Sätze von Armen 4 bis 12 und 4' bis 12' jeweils gruppenweise winkelversetzt jeweils einer Gruppe von eintretender elektromagnetischer Strahlung und austretender elektromagnetischer Strahlung zugeordnet sind.

Werden in weiterer Ausgestaltung die zwei AWG-Koppler derart kaskadiert, daß wie in Fig. 5 dargestellt mit einem Lichtwellenleiter 19 der Ausgang des ersten AWG-Kopplers 1 mit dem Eingang des zweiten AWG-Kopplers 1' verbunden wird, so kann hierdurch eine wesentlich erhöhte Trennung erreicht werden.

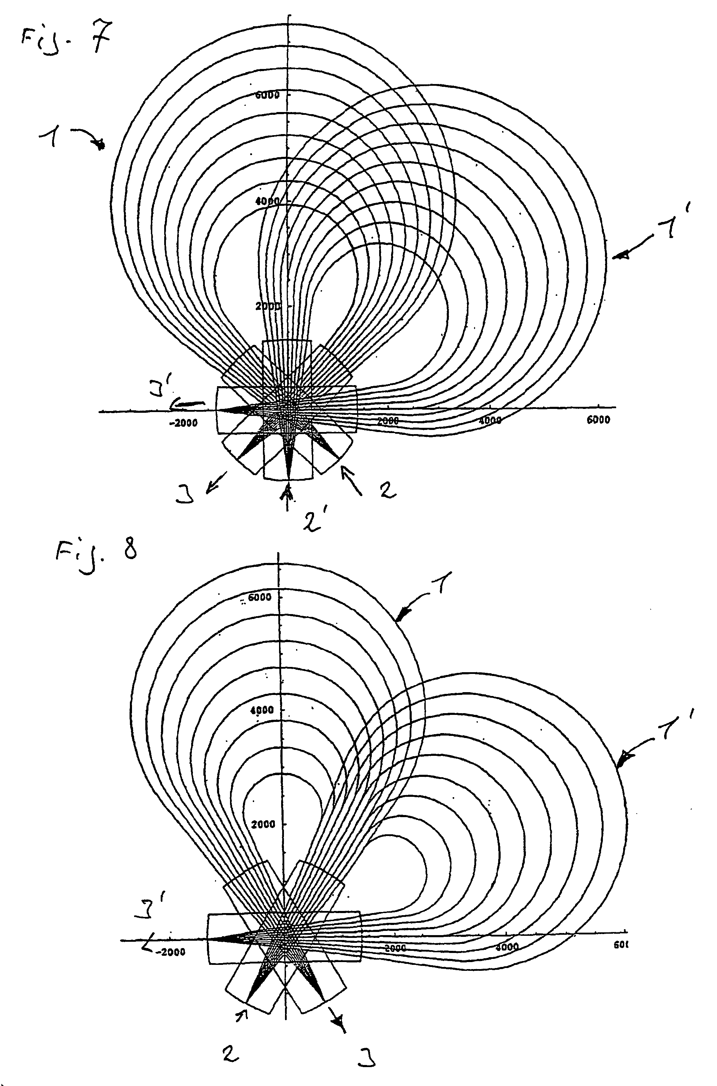

In Fig. 6 ist ein der Fig. 5 ähnliches Layout dargestellt, bei welchem die Eintrittskanäle 2, 2' platzsparend innerhalb der Arme des jeweiligen AWG-Kopplers 1, 1' angeschlossen sind.

Fig. 7 zeigt ein Layout, bei welchem sich die Arme 4 bis 12 und 4' bis 12' der beiden AWG-Koppler 1, 1' gegenseitig durchdringen, um nochmals weiteren Platz zu sparen und weitere Vorteile der Athermalisierung zu erhalten.

Fig. 8 zeigt einen Doppel-AWG-Koppler 1, 1 bei welchem sich die elektromagnetische Strahlung aus einem Eingangskanal 2 nach dem Freistrahlbereich 16 im wesentlichen intensitätsgleich auf zwei antisymmetrisch angeordnete AWG-Koppler 1, l'aufteilt und in zwei Ausgangskanalgruppen 3, 3' mit im wesentlichen jeweils halber Intensität ausgekoppelt wird. Hierdurch wird eine Strahlteilerfunktion bereitgestellt, welche bei nur einem Eingangskanal 2 zwei Ausgangskanäle 3, 3' mit spektral getrennten Signalen vorteilhaft bereitstellt.

Fig. 9 zeigt eine Prinzipdarstellung eines erfindungsgemäßen AWG-Kopplers 1, welcher an dessen Eingangskanal 2 mit einer Zuleitung 19 und an dessen Ausgangskanal 3 Ableitungen 20 bis 27 versehen ist.

## Patentansprüche

1. AWG-Koppler für die spektrale Trennung von elektromagnetischer Strahlung,
beinhaltend
einen Sternkoppler (16), für die Einkoppelung und Auskoppelung von elektromagnetischer Strahlung,
bei welchem die Arme (4 bis 12) des AWG-Kopplers (1, 1'), welche den optischen Weglängenunterschied definieren, jeweils ein erstes und ein zweites Ende aufweisen, **dadurch gekennzeichnet, dass** das erste Ende jedes Arms an eine Austrittsfläche (15) und das zweite Ende jedes Arms an eine von der Austrittsfläche verschiedene Eintrittsfläche (14) des Sternkopplers (16) angekoppelt sind und
die Arme (4 bis 12) des AWG-Kopplers (1, 1'), welche den optischen Weglängenunterschied, definieren auf einer keulenförmigen Linie liegen.

2. AWG-Koppler nach Anspruch 1, **dadurch gekennzeichnet, daß** der Sternkoppler ein Freistrahlbereich (16) ist, welcher sowohl in den AWG-Koppler (1, 1') eintretende als auch aus dem AWG-Koppler (1, 1') austretende Strahlung führen kann.

3. AWG-Koppler nach Anspruch 2, **dadurch gekennzeichnet, daß** der Sternkoppler (16) als doppelter Sternkoppler (16) ausgebildet ist, bei welchem sich die eingekoppelte und die auszukoppelnde elektromagnetische Strahlung überschneiden.

4. AWG-Koppler nach einem der vorstehenden Ansprüche, **dadurch gekennzeichnet, daß** mehrere Sätze von Armen (4 bis 12; 4' bis 12') jeweils gruppenweise winkelversetzt jeweils einer Gruppe von eintretender elektromagnetischer Strahlung und austretender elektromagnetischer Strahlung zugeordnet sind.

5. AWG-Koppler nach Anspruch 4, **dadurch gekennzeichnet, daß** aus einem ersten Satz von Armen (4 bis 12) austretende elektromagnetische Strahlung einem zweiten Satz von Armen (4' bis 12') zugeführt ist.

6. AWG-Koppler nach einem der vorstehenden Ansprüche, **dadurch gekennzeichnet, daß** der AWG-Koppler (1, 1') als zweidimensionaler Oberflächenwellenleiter ausgebildet ist.

7. AWG-Koppler nach einem der vorstehenden Ansprüche, **dadurch gekennzeichnet, daß** der AWG-Koppler (1, 1') als PECVD-Schichtsystem, insbesondere als PICVD-Schichtsystem, auf einem Substrat aufgebracht ist.

8. Nachrichtentechnisches System, umfassend einen AWG-Koppler (1, 1') nach einem der vorstehenden Ansprüche.

## Claims

1. AWG coupler for the spectral separation of electromagnetic radiation,
containing
a star coupler (16) for the coupling and decoupling of electromagnetic radiation wherein the arms (4 to 12) of the AWG coupler (1, 1') which define the optical path length difference are coupled with an exit area and an entry area (14) of the star coupler (16) and
the arms (4 to 12) of the AWG coupler (1, 1') which define the optical path length difference lie on a line in the form of a beam.

2. AWG coupler according to claim 1, **characterised in that** the star coupler is a free ray area which can guide radiation entering the AWG coupler (1, 1') as well as radiation leaving the AWG coupler (1, 1').

3. AWG coupler according to claim 2, **characterised in that** the star coupler (16) is formed as a double star coupler (16) wherein the coupled electromagnetic radiation and the electromagnetic radiation to be decoupled overlap.

4. AWG coupler according to one of the preceding claims, **characterised in that** several sets of arms (4 to 12; 4' to 12') offset at an angle in groups are assigned to a group of incoming electromagnetic radiation and outgoing electromagnetic radiation.

5. AWG coupler according to claim 4, **characterised in that** electromagnetic radiation leaving a first set of arms (4 to 12) is guided to a second set of arms (4' to 12').

6. AWG coupler according to one of the preceding claims, **characterised in that** the AWG coupler (1, 1') is formed as a two-dimensional surface waveguide.

7. AWG coupler according to one of the preceding claims, **characterised in that** the AWG coupler (1, 1') is arranged on a substrate as a PECVD layer system, in particular as a PICVD layer system.

8. System according to messaging technology incorporating an AWG coupler (1, 1') according to one of the preceding claims.

## Revendications

1. Coupleur à réseau sélectif planaire (ou coupleur AWG) servant à effectuer la séparation spectrale d'un rayonnement électromagnétique, comprenant un coupleur en étoile (16) servant à introduire dans le coupleur et à ressortir du coupleur un rayonnement électromagnétique, dans lequel les branches (4 à 12) du coupleur à réseau sélectif planaire (1, 1'), qui définissent la différence de longueur de trajet optique, sont chaque fois couplées à une surface de sortie (15) et à une surface d'entrée (14) du coupleur en étoile (16) et dans lequel les branches (4 à 12) du coupleur à réseau sélectif planaire (1, 1'), qui définissent la différence de longueur de trajet optique, sont situées sur une ligne en forme de lobe.

2. Coupleur à réseau sélectif planaire selon la revendication 1, **caractérisé en ce que** le coupleur en étoile est une zone de faisceau libre (16) qui peut conduire non seulement le rayonnement qui entre dans le coupleur à réseau sélectif planaire (1, 1') mais aussi le rayonnement qui sort du coupleur à réseau sélectif planaire (1, 1').

3. Coupleur à réseau sélectif planaire selon la revendication 2, **caractérisé en ce que** le coupleur en étoile (16) est réalisé sous forme de double coupleur en étoile (16) dans lequel le rayonnement électromagnétique introduit et le rayonnement à ressortir se chevauchent.

4. Coupleur à réseau sélectif planaire selon l'une des revendications précédentes, **caractérisé en ce que** plusieurs jeux de branches (4 à 12 ; 4' à 12') sont chacun associés à un groupe de rayons électromagnétiques entrants et de rayons électromagnétiques sortants, chaque jeu de branches présentant un décalage angulaire collectif.

5. Coupleur à réseau sélectif planaire selon la revendication 4, **caractérisé en ce que** le rayonnement électromagnétique sortant d'un premier jeu de branches (4 à 12) est amené à un deuxième jeu de branches (4' à 12').

6. Coupleur à réseau sélectif planaire selon l'une des revendications précédentes, **caractérisé en ce que** le coupleur à réseau sélectif planaire (1, 1') est réalisé sous forme de guide d'ondes plan à deux dimensions.

7. Coupleur à réseau sélectif planaire selon l'une des revendications précédentes, **caractérisé en ce que** le coupleur à réseau sélectif planaire (1, 1') est appliqué sur un substrat sous forme de système stratifié formé au moyen d'un procédé de dépôt chimique en phase vapeur assisté par un plasma (PECVD), notamment sous forme de système stratifié formé au moyen d'un procédé de dépôt chimique en phase vapeur à plasma pulsé (PICVD).

8. Système de télécommunication, comprenant un coupleur à réseau sélectif planaire (1, 1') selon l'une des revendications précédentes.
